# EUROPEAN PATENT APPLICATION

(11) **EP 1 206 136 A2**
(43) Date of publication of application: **15.05.2002**
(21) Application number: 01126441.3
(22) Date of filing: 08.11.2001
(51) Int. Cl.: H04N 5/85

(54) **Apparatus and method for recording video data**

(30) Priority: 08.11.2000 JP 2000340819
(71) Applicant: Kabushiki Kaisha Toshiba, Tokyo 105-8001 (JP)
(72) Inventor: Oku, Tadahiro, Minato-ku, Tokyo 105-8001 (JP); Kataoka, Hideo, Minato-ku, Tokyo 105-8001 (JP); Fujita, Kazuya, Minato-ku, Tokyo 105-8001 (JP)
(74) Representative: HOFFMANN - EITLE

(57) **Abstract**

After recording of video data is programmed, it is determined (S2), during the activation of a task of executing the programmed recording, whether or not a recording-destination drive included in a plurality of recording drives (10, 20) is being accessed by another task of transferring or copying recorded data. If the recording-destination drive is being accessed by the another task, the another task accessing the recording-destination drive is interrupted, and the programmed recording is executed.

## Description

The present invention relates to a recording/reproducing apparatus for recording and reproducing information such as video data, and more particularly to a recording/reproducing apparatus having an improved programming function.

Recently, a moving-picture-adapted optical disk reproducing apparatus for reproducing video data or audio data recorded on an optical disk has been developed. This reproducing apparatus is in widespread use for the purpose of enjoying movie or sing-along (karaoke) software, usually in the form of an LD or a video/CD reproducing apparatus.

As a data reproducing system for such optical disks, the MPEG-2 (Moving Picture Coding Expert Group) system, an international standard, is used at the present stage, and further a DVD standard which employs the AC3 audio compression system has been proposed recently. This DVD standard can be used to process sub-picture data such as a subtitle for a movie or karaoke, obtained by subjecting bit-map data to run-length compression.

As a standard for the VDV video medium, a DVD-RAM (removable medium) standard (4.7GB) has been completed in succession to a DVD-ROM standard, and DVD-RAM drives are now being spreading.

In accordance with the increasing capacity and reducing cost of recording media, a recording/reproducing apparatus equipped with a plurality of drives has come to be realizable. For example, an apparatus equipped with both a large-capacity hard disk drive and a DVD-RAM drive could be devised. In such a recording/reproducing apparatus, there may be a case where a TV program to be kept for a long time is selected from a number of TV programs recorded over a long period of time, and is transferred or copied to a removable medium.

Since, however, the transfer or copying of large-capacity data requires a lot of processing time, it is possible that recording programmed by a timer may be started while data is still being transferred or copied. If the bandwidth used to access a drive is not large enough to execute both accesses to the drive for data transfer or copy and for recording, there may be a case where recording which requires realtime access to the drive cannot be normally executed.

It is an object of the present invention to provide a recording/reproducing apparatus capable of normally executing programmed recording even if a drive to be used for the recording is used for another task when the recording is started.

To attain the object, there is provided a recording apparatus comprising: a plurality of recording drives recording information containing video data; a determining section determining after recording is programmed and during activation of a task of executing the programmed recording, whether or not that one of the recording drives, on which the programmed recording is executed, is being accessed by another task; an interrupting process section interrupting the another task and enabling the task of executing the programmed recording to execute the programmed recording on the one of the recording drives, if the determining section determines that the one of the recording drives is being accessed by the another task; and an executing section executing the programmed recording using the one of the recording drives.

According to the embodiment of the invention, the current state of a recording-destination drive is checked during the activation of a task of executing programmed recording. If the destination drive is being used by another task of transferring or copying recorded data, it is determined whether or not realtime recording is possible in this state. If realtime recording is impossible, the another task which currently uses the designation drive is interrupted, thereby enabling the execution of the programmed recording. If realtime recording is possible, the destination drive is simultaneously accessed by the task of executing the programmed recording and the another task currently using the drive, thereby executing the programmed recording.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating the configuration of a recording/reproducing apparatus to which the present invention is applied;
FIG. 2 is a flowchart illustrating the operation of programming the recording of data, executed by the recording/reproducing apparatus of the present invention; and
FIG. 3 is a task management table indicating the state of use of each recording drive.

An embodiment of the present invention will be described in detail with reference to the accompanying drawings.

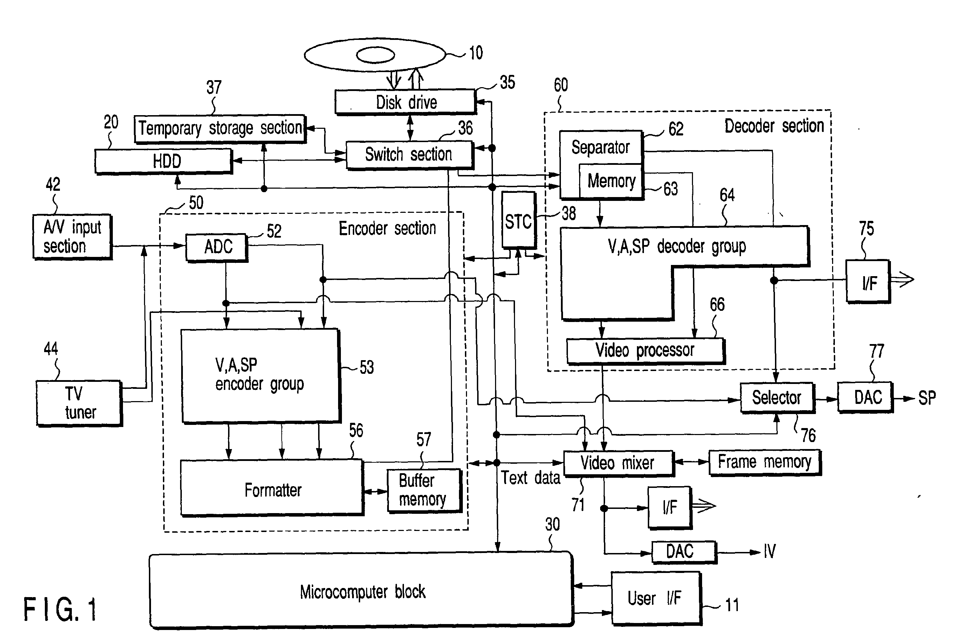

FIG. 1 is a block diagram illustrating the configuration of a recording/reproducing apparatus to which the present invention is applied. As shown, the recording/reproducing apparatus mainly comprises a hard disk device (HDD) 20; a disk drive 35 which rotates an optical disk 10 as an information recording medium capable of constructing a video file, to thereby read or write data from or to the optical disk 10; an encoder section 50 providing a recording side; a decoder section 60 providing a reproducing side; a switch section 36 which switches a data transfer path; a microcomputer block 30 which controls the operations of the apparatus; and a user interface I/F11.

The encoder section 50 comprises an ADC (Analog Digital Converter) 52, an encoder group 53 which includes a V (Video) encoder, an A (Audio) encoder and an SP (Sub-picture) encoder, a formatter 56 which converts the output of each encoder into a predetermined format, and a buffer memory 57.

The ADC 52 receives external analog video/audio signals from an AV input section 42, or analog TV/voice signals from a TV (television) tuner 44.

The V encoder has a function of converting an input analog signal into a digital signal compressed at a variable bitrate, on the basis of MPEG-2 or MPET-1. The A encoder has a function of converting an input digital audio signal into a digital signal compressed at a fixed bitrate or a linear PCM digital signal, on the basis of MPEG or AC-3.

When the AV input section 42 has input sub-picture information (for example, it has input a sub-picture signal from a DVD video player with an independent output terminal), or when the TV tuner 44 has received a broadcasted DVD video signal of such data configuration, the SP encoder receives a sub-picture signal (a sub-picture pack) in the DVD video signal. The sub-picture signal input to the SP encoder is converted into a predetermined signal form and sent to the formatter 56.

The formatter 56 uses the buffer memory 57 as its work area so as to execute a predetermined signal process on an input video signal, audio signal or sub-picture signal, etc., and supplies the switch section 36 with record data agreeable to a predetermined format (file configuration) for the DVD.

The section, which reads and/or writes data (records and/or reproduces) from and/or to the optical disk 10, includes the disk drive 35 having an optical system and a driving system, the switch section 36, a temporary storage section 37 and an STC (System Time Counter or System Time Clock) 38.

In the apparatus, information input from the A/V input section 42 or the TV tuner 44 and encoded by the encoder section 50, and management information can be supplied to the hard disk device 20 via the switch section 36, and stored in a hard disk incorporated in the hard disk device 20. Further, information recorded in a hard disk can be recorded in the optical disk 10 via the switch section 36 and the disk drive 35. Furthermore, the information input from the A/V input section 42 or the TV tuner 44 and encoded by the encoder section 50, and the management information can be recorded in the optical disk 10 via the switch section 36 and the disk drive 35. In addition, information recorded in the optical disk 10 can be recorded in the hard disk device 20 via the disk drive 35 and the switch section 36.

The microcomputer block 30 includes an MPU (Micro Processing Unit) or a CPU (Central Processing Unit), a ROM which stores a system control program including a process executed by the present invention, and a RAM which provides a work area necessary to execute the program.

The MPU of the microcomputer block 30 executes the process by the present invention, defective place detection, non-recorded area detection, data-recording-position setting, AV address setting, etc., in accordance with the control program stored in the ROM, using the RAM as the work area.

Those of execution results of the MPU, which should be reported to the user of the disk drive 35, are displayed on the display section of the user interface 11, or are OSD (On Screen Display) displayed on a monitor display. The user interface 11 includes reproduction, stop and record, etc. buttons. The user can operate the recording/reproducing apparatus by pushing these buttons.

The decoder section 60 comprises a separator 62 which separates and reads each pack from video data having a predetermined pack configuration for the DVD; a memory 63 used for the pack separation or other signal processing; a decoder group 64 including a V decoder which decodes main-picture data (the contents of each video pack) separated by the separator 62, an SP decoder which decodes sub-picture data (the contents of each sub-picture pack) separated by the separator 62, and an A decoder which decodes audio data (the contents of each audio pack) separated by the separator 62; and a video processor 66 which appropriately synthesizes main-video data obtained from the V decoder with sub-picture data obtained from the SP decoder, thereby outputting a main video data with a menu, a highlight button, a sub-title or another sub-picture superimposed thereon.

When outputting a digital signal from the A decoder, the signal is output to the outside of the apparatus via an interface (I/F) 75. On the other hand, when outputting an analog signal, a digital signal from the A decoder is converted into an analog one by a DAC 77 via a selector 76 and output to the outside. The selector 76 outputs one of a signal input from the TV tuner 44 or A/V input section 42 via the ADC 52, and a signal input from the decoder group 64. An analog audio signal is supplied to an external component (not shown) (e.g. a multi-channel stereo apparatus of 2 channels to 6 channels).

A description will now be given of the programming of recording. In the invention, when programming the recording of video data, which is input from an input section such as the A/V input section 42 or the TV tuner 44, etc., if a drive used as a recording destination, such as the disk drive 35 or the hard disk drive 20, etc., is currently being accessed for the transfer or copy of recorded data, the current access to the drive is stopped, and access thereto for the execution of the programmed recording is given priority over the former.

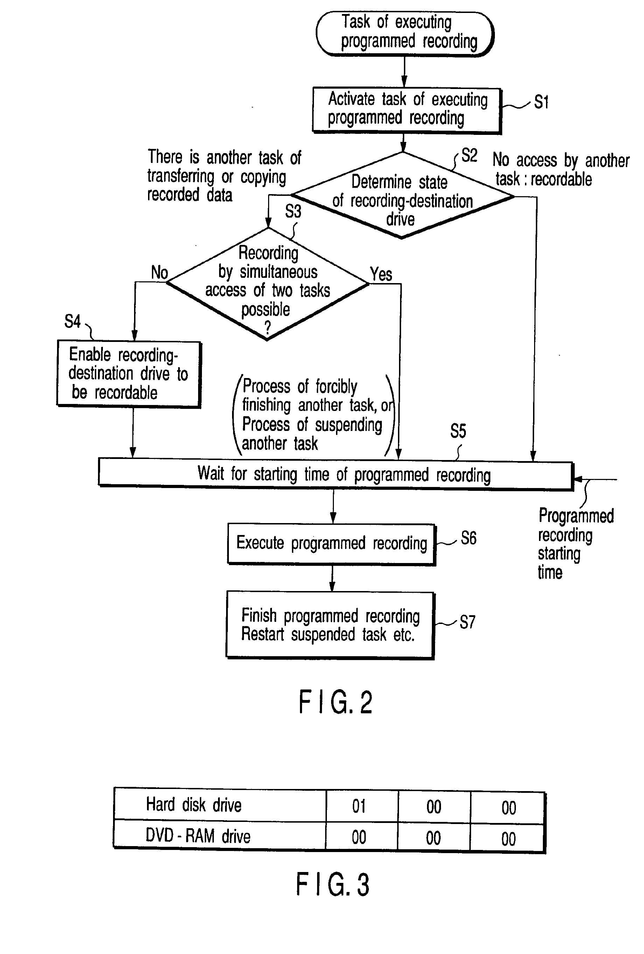

FIG. 2 is a flowchart illustrating the operation of programming the recording of data, executed by the recording/reproducing apparatus of the present invention. After the user programs the recording of data (such as a TV program), using, for example, the user interface 11, the microcomputer block 30 determines, upon activation of the programmed recording (i.e. immediately before the start of the programmed recording), whether or not a drive used as a recording destination, such as the hard disk drive 20 or the DVD-RAM disk drive 35, etc., is currently being accessed by another task for the transfer or copying of recorded data (step S1, S2). At this time, the microcomputer block 30 determines the operation state of each drive with reference to, for example, a task table as shown in FIG. 3. The task table of FIG. 3 stores task IDs (three IDs at maximum), such as recording or reproduction, etc., which are currently being executed in each of the hard disk drive and the DVD-RAM drive. Data "00" in the task table indicates that no task is being executed, data "01" indicates, for example, that the drive is accessed by the task of copying. The hard disk drive 20 can simultaneously be accessed by two tasks. In other words, apparently, the hard disk drive 20 can simultaneously execute, for example, recording and reproduction. When the drive 20 is simultaneously accessed by two tasks, data "10" indicative of this state is stored.

If a recording-destination drive is not used to execute another task of transferring or copying recorded data, the control program proceeds to step S5, where the starting time of programmed recording is waited for. If, on the other hand, the recording-destination drive is executing another task of transferring or copying recorded data, it is determined whether or not realtime recording can be executed by simultaneous access, to the recording-destination drive, of the task of executing the programmed recording and another task, i.e. whether or not realtime recording is possible in this state (step S3).

If the realtime recording is possible (i.e. if a recording drive, which can simultaneously be accessed by two tasks, is not simultaneously accessed), the control program proceeds to the step S5, where the starting time of programmed recording is waited for. On the other hand, if the realtime recording is impossible, the microcomputer block 30 enables the recording-destination drive to record programmed video data by suspending or forcibly finishing another task which is now using the drive (step S4).

When the present time has reached the starting time of the programmed recording, the microcomputer block 30 activates the recording-destination drive to execute the programmed recording, i.e. to record a set TV program (step S6). After finishing the programmed recording and confirming that the recording-destination drive has shifted to a recordable state, the microcomputer block 30 executes a programmed-recording finishing process (step S7). At this time, if there is any other task suspended to execute the programmed recording, the microcomputer block 30 restarts the task. In other words, the microcomputer block 30 restarts the task of transferring or copying recorded data, using the recording-destination drive.

Although a description has been given of a recording/reproducing apparatus and a control method used when executing programmed recording, the invention is not limited to this. It is apparent that the invention is also applicable to an information recording medium such as a ROM or an optical disk which stores a control program as described above.

## Claims

1. A recording apparatus **characterized by** comprising:
a plurality of recording drives (10, 20) recording information containing video data;
a determining section (30, S2) determining, after recording is programmed and during activation of a task of executing the programmed recording, whether or not that one of the recording drives (10, 20), on which the programmed recording is executed, is being accessed by another task;
an interrupting process section (30, S4) interrupting said another task and enabling the task of executing the programmed recording to execute the programmed recording on said one of the recording drives (10, 20), if the determining section (30, S2) determines that said one of the recording drives is being accessed by said another task; and
an executing section (30, S6) executing the programmed recording using said one of the recording drives.

2. The recording apparatus according to claim 1, **characterized by** further comprising a judging section (30, S3) judging, if the determining section (30, S2) determines that said one of the recording drives (10, 20) is being accessed by said another task, whether or not realtime recording can be executed by simultaneous access, to said one of the recording drives, of the task of executing the programmed recording and said another task, wherein if the realtime recording is impossible, the interrupting process section (30, S4) interrupts said another task.

3. The recording apparatus according to claim 1, **characterized in that** the interrupting process section (30, S4) includes a section which suspends said another task currently using said one of the recording drives (10, 20), and said apparatus further comprising a section (30, S7) which restarts said another task after finishing the programmed recording.

4. The recording apparatus according to claim 1, **characterized in that** the interrupting process section (30, S4) includes a section which forcibly finishes said another task currently using said one of the recording drives (10, 20).

5. A recording method for use in a recording apparatus having a plurality of recording drives (10, 20) recording information including video data, **characterized by** comprising the steps of:
determining (S2), after recording is programmed and during activation of a task of executing the programmed recording, whether or not that one of the recording drives (10, 20), on which the programmed recording is executed, is being accessed by another task;
interrupting (S4) said another task and enabling the task of executing the programmed recording to execute the programmed recording on said one of the recording drives (10, 20), if said one of the recording drives is being accessed by said another task; and
executing (S6) the programmed recording using said one of the recording drives.

6. The recording method according to claim 5, **characterized by** further comprising the step of judging (S3), if said one of the recording drives (10, 20) is being accessed by said another task, whether or not realtime recording can be executed by simultaneous access, to said one of the recording drives, of the task of executing the programmed recording and said another task, wherein if the realtime recording is impossible, said another task is interrupted.

7. The recording method according to claim 5, **characterized by** further comprising the steps of suspending said another said another task currently using said one of the recording drives (10, 20) and restarting said another task after finishing the programmed recording.

8. The recording method according to claim 5, **characterized in that** said interrupting (S4) step includes a step of forcibly finishing said another task currently using said one of the recording drives (10, 20).

9. An information recording medium storing a control program for use in a recording apparatus having a plurality of recording drives (10, 20) which record information including video data, the control program **characterized by** comprising:
determining (S2), after recording is programmed and during activation of a task of executing the programmed recording, whether or not that one of the recording drives (10, 20), on which the programmed recording is executed, is being accessed by another task;
interrupting (S4) said another task and enabling the task of executing the programmed recording to execute the programmed recording on said one of the recording drives (10, 20), if said one of the recording drives is being accessed by said another task; and
executing (S6) the programmed recording using said one of the recording drives.
